# EUROPEAN PATENT SPECIFICATION

(11) **EP 4 040 565 B1**
(45) Date of publication and mention of the grant of the patent: **16.10.2024**
(21) Application number: 20872216.5
(22) Date of filing: 20.07.2020
(51) Int. Cl.: H01M 10/42, H01M 10/48, H01M 50/262, H01M 50/209, H01M 50/264, H01M 50/284, H01M 50/358, B60K 1/04

(54) **BATTERY MODULE, AND ELECTRIC VEHICLE AND POWER STORAGE DEVICE COMPRISING BATTERY MODULE**
BATTERIEMODUL UND ELEKTROFAHRZEUG UND STROMSPEICHERVORRICHTUNG MIT DEM BATTERIEMODUL
MODULE DE BATTERIE ET VÉHICULE ÉLECTRIQUE ET DISPOSITIF DE STOCKAGE D'ÉNERGIE COMPRENANT LE MODULE DE BATTERIE

(30) Priority: 30.09.2019 JP 2019180640
(43) Date of publication of application: 10.08.2022
(73) Proprietor: SANYO Electric Co., Ltd., Daito-shi Osaka 574-8534 (JP)
(72) Inventor: YANO, Junya, Osaka-shi, Osaka 540-6207 (JP); KUNIMITSU, Tomonori, Osaka-shi, Osaka 540-6207 (JP); NAKAYAMA, Masato, Osaka-shi, Osaka 540-6207 (JP); HAMADA, Taisuke, Osaka-shi, Osaka 540-6207 (JP)
(74) Representative: Vigand, Philippe
(86) International application number: PCT/JP2020/028032
(87) International publication number: WO 2021/065160

(56) References cited:
- WO-A1-2012/042913
- JP-A- 2012 256 521
- JP-A- 2013 140 055
- JP-A- 2013 179 094
- JP-A- H11 283 590
- KR-A- 20150 042 463
- US-A1- 2010 052 692
- US-A1- 2011 206 948
- US-A1- 2012 019 061

## Description

### TECHNICAL FIELD

The present invention relates to a battery module in which a plurality of battery cells are connected, and an electric vehicle and a power storage device that include this battery module. In particular, the present invention relates to a battery module of a motor that is mounted on an electric vehicle such as a hybrid vehicle, a fuel cell automobile, an electric automobile, and an electric motorcycle and causes the vehicle to travel, or a battery module that supplies electric power to a power source for large current used for home and factory power storage applications, and an electric vehicle and a power storage device that include this battery module.

In the present description, the term "battery module" is used in a broad sense including all battery modules including a voltage detection circuit that detects a voltage of a battery cell, the battery module where a pair of end plates are disposed on both end surfaces of a plurality of battery cells and the end plates are coupled with a bind bar, for example, a "battery pack" that does not incorporate a controlling circuit of a battery, such as a charge and discharge circuit of a battery.

### BACKGROUND ART

A battery module including a plurality of battery cells is used for a battery module for a vehicle such as a hybrid automobile or an electric automobile, a power source of a power storage system for a factory, a home, and the like (see, for example, PTL 1).

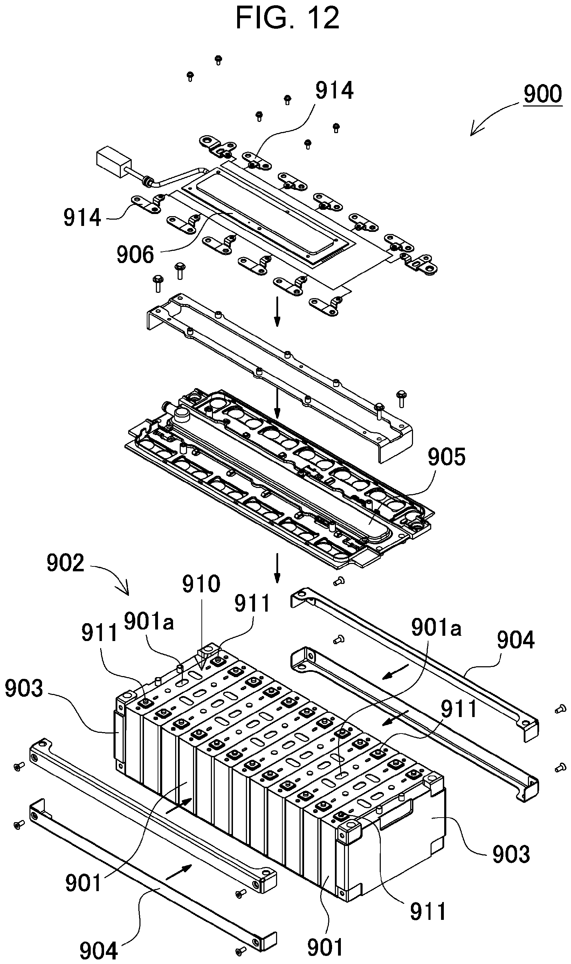

An example of such a battery module is shown in an exploded perspective view of Fig. 12. In battery module 900 shown in this figure, a plurality of battery cells 901 are stacked to make battery stack 902, end plates 903 are disposed on both end surfaces of battery stack 902, and the pair of end plates 903 are fastened by bind bars 904 to fix battery cells 901. In each battery cell 901, a pair of positive and negative electrode terminals 911 are disposed on terminal surface 910 on an upper surface. Positive and negative electrode terminals 911 are electrically connected via bus bar 914 to connect battery cells 901 in series or in parallel.

Gas duct 905 for guiding the exhaust gas from exhaust valve 910a of terminal surface 901 on the upper surface of battery cell 901 is disposed on the upper surface of battery stack 902. Gas duct 905 is provided with an inflow hole (not illustrated) through which the exhaust gas ejected from exhaust valve 901a of each battery cell 901 flows in. Circuit board 906 connected to each battery cell 901 is disposed on an upper surface of gas duct 905.

The gas duct is provided to exhaust high-temperature, high-pressure exhaust gas discharged from the exhaust valve of the battery cell to the outside. When the internal pressure rises to a set value, the exhaust valve opens to prevent burst of the battery case. This exhaust valve opens upon detection that the internal pressure of the battery becomes abnormally high. The internal pressure of the battery cell becomes abnormally high due to occurrence of overcharge, overdischarge, and internal short circuit that cause occurrence of a combustion event inside the battery cell. Therefore, the exhaust gas becomes high temperature and high pressure. The high-temperature, high-pressure exhaust gas ejected from the battery cell has an adverse effect such as combustion of peripheral members. The gas duct is disposed on the terminal surface of the battery cell in order to smoothly exhaust the exhaust gas to the outside, but a circuit board on which the electronic component is mounted is also disposed on the terminal surface of the battery cell, and this circuit board is also adversely affected such as combustion of the board by the high-temperature, high-pressure exhaust gas. A voltage detection circuit that implements a protection circuit of the battery cell is also mounted on the circuit board, and those electronic components are also adversely affected by the high-temperature, high-pressure exhaust gas. Furthermore, a connector and a lead wire that connect the battery cell to the circuit board are also disposed on the terminal surface of the battery cell. The high-temperature, high-pressure exhaust gas burns the connector and the lead wire, and such combustion heat causes the battery cell to emit smoke and ignite in a chain manner, thereby causing a reduction in safety.

Since the exhaust gas has an abnormally high temperature and high pressure, it is difficult for the gas duct to completely discharge the gas to the outside. Although the circuit board is separated from the terminal surface of the battery cell by the gas duct, the exhaust gas leaking from the gas duct may further increase heat damage, such as combustion of the circuit board. The exhaust gas contains foreign matters such as metal pieces inside the battery cell, and this also causes short-circuit failure of an electronic circuit of the circuit board.

It is desired that the entire battery module is downsized with almost no exception in all applications. This is because the capacity of charge and discharge with respect to the unit volume is increased to improve the performance. However, since a large number of components are disposed on the terminal surface of the battery cell, it is difficult to reduce the height from the terminal surface. Specifically, examples of the component disposed on the terminal surface include a gas duct for discharging exhaust gas, an electrode terminal protruding from the terminal surface, a bus bar of a metal sheet for connecting adjacent electrode terminals, a circuit board on which an electronic component is mounted, a lead wire for connecting the circuit board and a battery cell, and an insulation material for insulating the component from a high-voltage battery stack. Many of these components need to be disposed so as not to interfere with one another.

In a battery module in which a large number of components such as a gas duct, a circuit board, and a lead wire are disposed on a terminal surface of a battery cell, it is difficult to reduce the height of the battery module to downsize the battery module only by improving the component arrangement, and the circuit board substantially has an adverse effect in increasing the volume, in particular the height of the battery module. On the other hand, when the circuit board is thinned and downsized, a disadvantage that the heat energy of a heat generating component mounted on the circuit board cannot be efficiently dissipated becomes remarkable. Since a heat generating component such as a semiconductor element and a discharge resistor is mounted on the circuit board, it is extremely important to efficiently dissipate heat energy to lower a temperature rise of the heat generating component below a set temperature.

PTL 2 discloses a battery module reflecting the preamble of present claim 1. Further art is disclosed by the documents PTL 3 and PTL 4.

### Citation List

### Patent Literature

PTL 1: WO 2014/024452
PTL 2: US 2011/206948
PTL 3: WO 2012/042913
PTL 4: JP 2012 256521

### SUMMARY OF THE INVENTION

The present invention has been developed for the purpose of preventing the above adverse effect, and an object of the present invention is to provide a battery module that protects an electronic circuit block including a voltage detection circuit from a high-temperature, high-pressure exhaust gas and achieve high safety, and can efficiently dissipate heat from the electronic circuit block, and an electric vehicle and a power storage device that include this battery module.

A battery module according to an aspect of the present invention is defined in the appended claims and includes a battery stack including a plurality of stacked battery cells, a pair of end plates disposed at both end parts in a stacking direction of the battery stack, a bind bar in which the pair of end plates are coupled to fix the battery cells, and an electronic circuit block mounted with a voltage detection circuit that detects a voltage of the battery cells, and the electronic circuit block is disposed on a surface of the end plate.

An electric vehicle according to an aspect of the present invention is defined in the appended claims and includes the battery module, a running motor supplied with electric power from the battery module, a vehicle body on which the battery module and a motor are mounted, and wheels driven by the motor to cause the vehicle body to travel.

A power storage device according to an aspect of the present invention is defined in the appended claims and includes the battery module and a power supply controller that controls charge and discharge of the battery module, and the power storage device uses the power supply controller to enable charge of the battery cell by external power and controls charge of the battery cell.

The battery module described above protects the electronic circuit block including the voltage detection circuit from the high-temperature, high-pressure exhaust gas to achieve high safety, and can efficiently dissipate heat from the electronic circuit block.

### BRIEF DESCRIPTION OF THE DRAWINGS

Fig. 1 is a perspective view of a battery module according to an exemplary embodiment of the present invention.
Fig. 2 is an exploded perspective view of the battery module shown in Fig. 1.
Fig. 3 is an exploded perspective view of the battery module shown in Fig. 1 as viewed from below.
Fig. 4 is a cross-sectional view taken along line IV-IV of the battery module shown in Fig. 1.
Fig. 5 is a plan view showing an end part of the battery module shown in Fig. 1.
Fig. 6 is a cross-sectional view taken along line VI-VI of the battery module shown in Fig. 5.
Fig. 7 is a circuit diagram showing an example of an electronic circuit block.
Fig. 8 is an enlarged plane showing another example of a coupling structure between an end plate and an electronic circuit block.
Fig. 9 is a block diagram showing an example in which a battery module is mounted on a hybrid vehicle that travels by an engine and a motor.
Fig. 10 is a block diagram showing an example in which a battery module is mounted on an electric automobile traveling only by a motor.
Fig. 11 is a block diagram showing an example in which a battery module is used in a power storage device.
Fig. 12 is an exploded perspective view of a conventional battery module.

### DESCRIPTION OF EMBODIMENT

The present invention will be described below in detail with reference to the drawings. Note that, in the following description, terms (e.g., "up", "down", and other terms including those terms) indicating specific directions or positions are used as necessary; however, use of those terms is for facilitating understanding of the invention with reference to the drawings, and the technical scope of the present invention is not limited by the meanings of those terms. Parts denoted by the same reference numerals appearing in a plurality of figures indicate the same or equivalent parts or members.

The exemplary embodiment described below shows a specific example of the technical idea of the present invention, and the present invention is not limited to the following embodiment. In addition, unless otherwise specified, dimensions, materials, shapes, relative arrangements, and the like of the configuration components described below are not intended to limit the scope of the present invention only to them, but are intended to be illustrative. The contents described in one exemplary embodiment or example are also applicable to other exemplary embodiments and examples. The sizes, positional relationships, and the like of members shown in the drawings are sometimes exaggerated in order to make the description clear.

A battery module of a first aspect of the present invention includes a battery stack including a plurality of stacked battery cells, a pair of end plates disposed at both end parts in a stacking direction of the battery stack, a bind bar in which the pair of end plates are coupled, and an electronic circuit block mounted with a voltage detection circuit that detects a voltage of the battery cells, and the electronic circuit block is disposed on a surface of the end plate.

The above battery module has an advantage that the battery module can be downsized to increase the charge and discharge capacity with respect to the unit volume while protecting the circuit board from the high-temperature, high-pressure exhaust gas ejected from the exhaust valve of the battery cell, and the heat energy of the electronic circuit block on which the voltage detection circuit is mounted can be efficiently dissipated to the end plate and the outside and the temperature rise of the electronic circuit block can be reduced. In particular, the above structure allows the electronic circuit block to be disposed on the surface of the end plate in a vertical posture, so that the above structure has an advantage of being able to efficiently dissipate heat by the air smoothly convecting on the surface of the electronic circuit block. The electronic circuit block shielded from the high-temperature, high-pressure exhaust gas by the end plate ensures high safety as a normal operation state even in an abnormal use state of the battery cell in which the exhaust valve opens. The characteristic that the heat energy of the electronic circuit block can be efficiently dissipated also implements a feature that temperature rise can be reduced while the electronic circuit block is downsized. A temperature rise of the electronic component mounted on the electronic circuit block is also reduced, and a feature that a stable operation of the electronic component can be guaranteed is also achieved.

In the battery module of a second aspect of the present invention, a gas duct is disposed opposite to a terminal surface of a battery cell.

In the battery module described above, an electronic circuit block on which the voltage detection circuit is mounted needs not to be disposed on the terminal surface of the battery cell. Therefore, the battery module has an advantage that a gas duct having a large area of a gas flow path is disposed on the terminal surface of the battery cell, and a high-temperature, high-pressure exhaust gas can be exhausted more quickly. The gas duct that allows the exhaust gas to smoothly flow to the inside also prevents leakage of the exhaust gas, blocks the adverse effect due to the gas leaking to the outside of the duct, that is, the combustion of the connector and the lead wire due to the leakage gas, and blocks a sequential emission of smoke and ignition of the battery cell due to this, thereby achieving a feature of being able to ensure high safety. Since the electronic circuit block is not disposed in the vicinity of the gas duct, it is possible to suppress occurrence of a short-circuit failure of the electronic circuit block due to a foreign matter such as a metal piece contained in the exhaust gas.

In a battery module of a third aspect of the present invention, the electronic circuit block is fixed to the outer surface of the end plate in a thermally coupled state.

The battery module described above has an advantage that the heat generation energy of the electronic circuit block is efficiently thermally conducted to the end plate, and the temperature rise of the electronic circuit block can be reduced. In particular, since the end plate is required to have a tough structure that fixes a plurality of battery cells, the end plate is heavy and has a large heat capacity, the end plate absorbs a large amount of heat generation energy of the electronic circuit block. Therefore, the heat energy of the electronic circuit block is efficiently absorbed to reduce the temperature rise.

In a battery module of a fourth aspect of the present invention, the outer shape of the electronic circuit block is smaller than the outer shape of the end plate, and the electronic circuit block is disposed on the surface without protruding from the outer peripheral edge of the end plate.

In the battery module described above, while the electronic circuit block is disposed on the end plate, this, the outer periphery of the end plate does not protrude, so that the electronic circuit block does not increase the outer shape of the battery module.

In a battery module of a fifth aspect of the present invention, the end plate is made of metal.

This battery module has a feature that the heat energy of an electronic circuit block can be more efficiently dissipated by the metal end plate. This is because the metal end plate has excellent thermal conduction characteristics and a large heat capacity, and efficiently absorbs the heat energy of the electronic circuit block and dissipates heat.

In a battery module of a sixth aspect of the present invention, the electronic circuit block is fixed to the end plate in an insulated state.

In a battery module of a seventh aspect of the present invention, the electronic circuit block includes an equalizing circuit of the battery cells.

In the battery module described above, the heat generating component of the equalizing circuit of the electronic circuit block can be efficiently dissipated by the end plate, so that the battery module has an advantage that the equalizing circuit can quickly equalize the battery cells. This is because the power consumption of the equalizing circuit is increased to discharge the battery cell with a large current, and the voltage of the high-voltage battery cell can be rapidly reduced. The equalizing circuit discharges a high-voltage battery cell to eliminate voltage imbalance or charges a low-voltage battery cell with a high-voltage battery cell and thus equalizes. A circuit that discharges and equalizes the high-voltage battery cell discharges the high-voltage battery cell with a discharge resistor, and an equalizing circuit that charges the low-voltage battery cell with the high-voltage battery cell supplies electric power from the high-voltage battery cell to the low-voltage battery cell and equalizes. In the circuit that discharges and equalizes the battery cell by the discharge resistor, the discharge resistor that discharges the battery cell and the semiconductor element that controls the discharge current of this discharge resistor generate heat. This circuit has a structure for efficiently discharging the heat energy of the discharge resistor and the semiconductor element, and can shorten the time for equalizing by increasing the discharge current of the discharge resistor and the semiconductor element. When the discharge current is increased, the heat generation amount is also increased. Therefore, efficient discharge can increase the discharge current. In the equalizing circuit that charges the low-voltage battery cell with the high-voltage battery cell, the semiconductor element that controls the current to be charged from the high-voltage battery cell to the low-voltage battery cell generates heat, and therefore the time for equalization can be shorten by increasing the current of this semiconductor element.

In a battery module of an eighth aspect of the present invention, the electronic circuit block includes a wireless communication circuit.

In a battery module of a ninth aspect of the present invention, the end plate includes, as an integrated structure, a shield protrusion part that shields the outer peripheral edge of the electronic circuit block.

A battery module of a tenth aspect of the present invention includes a base plate to which the end plate is fixed, in which the base plate includes a bracket protruding from the outer surface of the end plate, and the electronic circuit block has a shape not protruding from a tip end edge of the bracket to the outer surface in plan view.

In the battery module described above, while the electronic circuit block is fixed to the end plate, the outer shape in plan view is not larger than that of the base plate. Therefore, this battery module has a feature that the electronic circuit block can be disposed at an ideal position while being downsized.

In a battery module of an eleventh aspect of the present invention, the lower part of the electronic circuit block is fixed to the bracket.

The above battery module has a feature that the electronic circuit block can be reliably fixed to the base plate while being downsized.

In a battery module of a twelfth aspect of the present invention, the bracket has a fixing hole, and the electronic circuit block is disposed at a position different from the fixing hole in plan view.

The above battery module has a feature that the base plate can be easily and reliably fixed to usage equipment while the electronic circuit block is fixed to the end plate.

In a battery module of a thirteenth aspect of the present invention, a part of an upper edge part of the electronic circuit block is locally fixed to the end plate and the lower part is fixed to the bracket.

In the battery module described above, even if the battery cell expands and the end plate deforms, the deformation does not adversely affect the electronic circuit block. In the battery module in which the plurality of battery cells are stacked, expansion of the battery cells deforms the end plate. In the battery module in which the plurality of battery cells are stacked, when charge and discharge are repeated, the battery cell expands, and the end plate deforms. Since the end plate has bind bars fixed on both sides, the expansion of the battery cell causes the end plate to curve in a central convex manner. When the electronic circuit block fixed to the end plate deforms together with the end plate, distortion due to the deformation adversely affects the electronic circuit block. For example, an electronic circuit block that fixes an electronic component to a circuit board has an adverse effect that the circuit board is curved, a conducting part is damaged, and the like. In the battery module described above, since a part of the upper edge part of the electronic circuit block is locally fixed to the end plate, even when the end plate is curved, the electronic circuit block does not deform together. Since the lower part of the electronic circuit block is fixed to the bracket of the base plate, the electronic circuit block is reliably fixed at the upper part and the lower part. That is, the electronic circuit block is firmly fixed to the end plate and the base plate without being adversely affected by deformation of the end plate.

In a battery module of a fourteenth aspect of the present invention, the electronic circuit block is locally fixed to the end plate.

In a battery module of a fifteenth aspect of the present invention, the electronic circuit block is fixed to a surface of the end plate via a rubber-like elastic body.

In the battery module described above, since the electronic circuit block is fixed to the end plate via the rubber-like elastic body, the electronic circuit block can be reliably fixed to the end plate while preventing an adverse effect due to deformation of the end plate. The electronic circuit block is brought into close contact with the end plate over a wide area via the rubber-like elastic body, the electronic circuit block and the end plate are fixed in a preferable thermally coupled state, and thus heat dissipation characteristics of the electronic circuit block can be improved.

### (First exemplary embodiment)

The battery module shown in the following example is mainly optimal for a power source of an electric vehicle such as a hybrid vehicle and a plug-in hybrid vehicle that runs by both an engine and a motor, an electric automobile that runs only by a motor, and an electric motorcycle that runs by a motor. However, the battery module of the present invention is also suitable for a power source for a power storage device that is an application requiring a large output other than an electric vehicle.

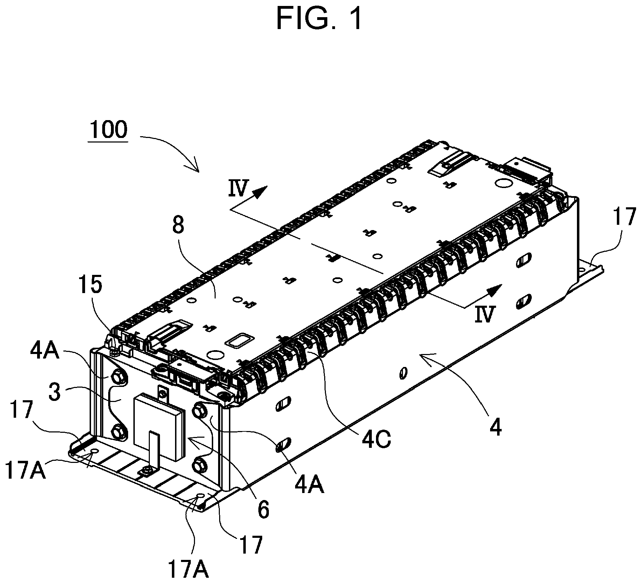

The battery module shown in Figs. 1 to 6 includes battery stack 2 in which a plurality of battery cells 1 are stacked in a thickness direction, a pair of end plates 3 disposed at both end parts in a stacking direction of battery cells 1 of battery stack 2, bind bar 4 coupled to end plates 3 at the both end parts of battery stack 2, and electronic circuit block 6 connected to battery cells 1 of battery stack 2 via lead wire 19. The battery module shown in the drawing includes gas duct 5 coupled to exhaust valve 1a of each battery cell 1 and exhausts the exhaust gas ejected from exhaust valve 1a to the outside, upper surface cover 8 disposed above battery stack 2 and on gas duct 5, and base plate 9 disposed below the battery stack and fixes end plate 3.

### (Battery cell 1)

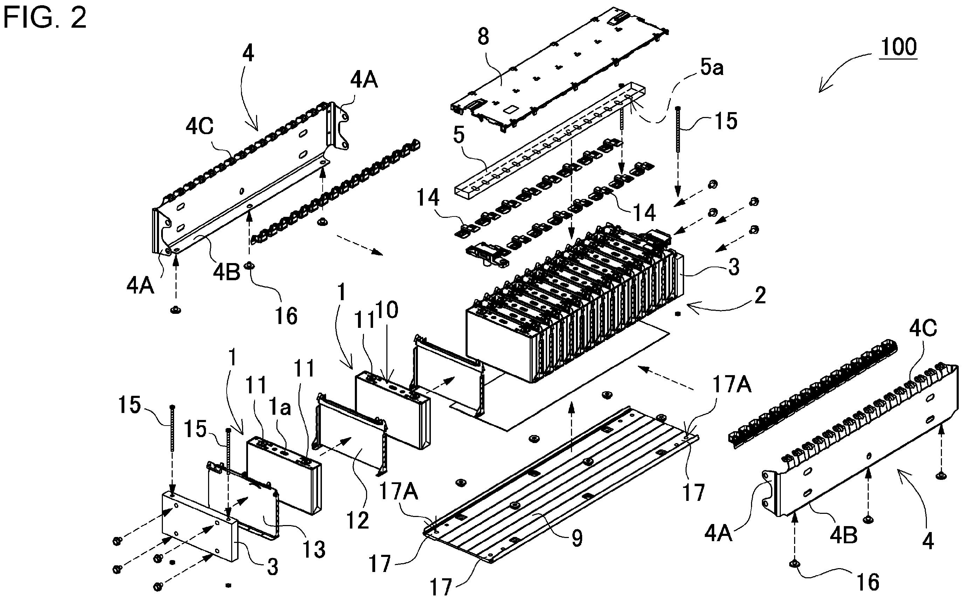

As shown in Fig. 2, battery cell 1 is a rectangular secondary battery having a width larger than the thickness, in other words, thinner than the width, and battery cells 1 are stacked in the thickness direction to form battery stack 2. Battery cell 1 is a lithium ion secondary battery. However, the battery cell may be any other chargeable secondary battery, such as a nickel hydride battery and a nickel cadmium battery. In battery cell 1, positive and negative electrode plates are housed in an outer covering can having a sealed structure together with an electrolyte solution. The outer covering can is formed by press-molding a metal sheet made of aluminum, an aluminum alloy, or the like into a rectangular shape, and an opening part is hermetically sealed with a sealing plate. The sealing plate is made of the aluminum or aluminum alloy same as the outer covering can, and fixes positive and negative electrode terminals 11, and an exhaust valve is provided between electrode terminals 11. Positive and negative electrode terminals 11 are in a state where at least one of electrode terminals 11 is insulated from the sealing plate. Battery cell 1 is provided with positive and negative electrode terminals 11 with the sealing plate as terminal surface 10. In battery cell 1, the bottom surface and the side surface of the outer covering can are covered with an insulating film.

The plurality of battery cells 1 are stacked such that the thickness direction of each battery cell 1 is the stacking direction, and constitute battery stack 2. In the battery cell, with one outer peripheral surface of a quadrangle as terminal surface 10 provided with positive and negative electrode terminals 11, terminal surfaces 10 are arranged on the same plane, and the plurality of battery cells 1 are stacked to form battery stack 2.

### (Battery stack 2)

As shown in Fig. 2, in battery stack 2, insulating spacer 12 is held between stacked battery cells 1. Insulating spacer 12 in the drawing is manufactured into a thin plate shape or a sheet shape with an insulation material such as resin. Insulating spacer 12 shown in the drawing has a plate shape having substantially the same size as the opposite surface of battery cell 1, and insulating spacer 12 is stacked between battery cells 1 adjacent to each other and insulates adjacent battery cells 1 from each other. As the spacer disposed between adjacent battery cells 1, a spacer having a shape in which a flow path of a cooling gas is formed between the battery cell and the spacer can also be used.

In battery stack 2, bus bar 14 made of metal is connected to positive and negative electrode terminals 11 of adjacent battery cells 1, and the plurality of battery cells 1 are connected in series or in parallel or in series and in parallel by bus bar 14. In battery stack 2, the output voltage and the chargeable and dischargeable capacity are set values according to the number of battery cells 1 to be stacked. In battery stack 2, the output voltage can be increased by the number of battery cells 1 connected in series, and the charge and discharge capacity can be increased by the number of battery cells 1. In the battery module, the output voltage and the capacity are set as setting values by the number of battery cells 1 constituting battery stack 2 and the connection state of connecting in series and in parallel. Therefore, the number of battery cells 1 and the connection state are in an optimal state in consideration of the application.

Bus bar 14 is provided with a connection part (not illustrated) for connection to electrode terminal 11. Bus bar 14 is welded and connected to electrode terminal 11 by irradiating a boundary connecting the connection part and electrode terminal 11 with a laser beam. The bus bar can be connected to the electrode terminal by providing a male screw in the electrode terminal, opening a through-hole for inserting the electrode terminal, and screwing a nut into the male screw of the electrode terminal inserted in the through-hole, or can be connected to the electrode terminal by providing a female screw hole in the electrode terminal, and screwing a set screw penetrating the bus bar into the female screw hole. In the battery module, the upper surface of battery stack 2 can be provided with a resin insulating cover (not illustrated). The insulating cover is provided with an opening part, electrode terminal 11 is exposed from this opening part, bus bar 14 of a metal sheet is connected to electrode terminal 11 exposed from the opening part of the insulating cover close to the upper surface of the insulating cover, and the plurality of battery cells 1 can be connected in a predetermined array.

### (End surface spacer 13)

In battery stack 2, end plates 3 can be disposed on both end surfaces of battery stack 2 with end surface spacer 13 interposed therebetween in order to insulate battery stack 2 from end plates 3 made of metal. End surface spacer 13 is disposed between battery stack 2 and end plate 3 to insulate end plate 3 from battery stack 2. End surface spacer 13 is manufactured into a thin plate shape or a sheet shape with an insulation material such as resin. End surface spacer 13 is provided with a plate part having a size capable of covering the entire opposing surface of battery cell 1, and this plate part is stacked between battery cell 1 and end plate 3 disposed at both ends of battery stack 2.

### (End plate 3)

End plates 3 are provided on both end surfaces of battery stack 2 in the stacking direction of battery cells 1, and fix battery stack 2. End plate 3 is a metal sheet and is a quadrangular plate whose outer shape is substantially equal to the outer shape of battery cell 1 or slightly larger than battery cell 1. End plate 3 can be manufactured of a high-tensile rope to have a tough structure. End plate 3 can be a single metal sheet, can have a structure in which a plurality of metal sheets are stacked, or can be a stack body of a metal sheet and plastic. End plate 3 made of one metal sheet has a large heat capacity, and can efficiently absorb heat energy of electronic circuit block 6. In the end plate on which the plurality of plates are stacked, the surface sheet to which the electronic circuit block is fixed is at least a metal sheet. This is because the electronic circuit block is fixed in a thermally coupled state and improves heat dissipation characteristics. The end plate can be a stacked structure of an aluminum plate and a high-tensile rope plate. This end plate can also have a structure in which the electronic circuit block is fixed with the surface sheet as an aluminum plate, the aluminum plate and the high-tensile steel plate are stacked in a surface contact state, and heat can be efficiently conducted from the aluminum plate to the high-tensile steel plate. However, the end plate is not necessarily made of metal, and can be made of plastic having excellent strength, such as engineering plastic.

### (Bind bar 4)

Bind bar 4 extends in the stacking direction of battery cells 1, fixes both end parts to end plate 3, and fixes battery stack 2 with the pair of end plates 3. Bind bars 4 are metal sheets each having a predetermined up-down width and a predetermined thickness along a side surface of battery stack 2, and are disposed to oppose both side surfaces of battery stack 2. Bind bar 4 pressurizes both end surfaces of battery stack 2 with strong pressure, and places battery cells 1 to be charged and discharged to expand at a fixed position. As the metal sheet of bind bar 4, a high-tensile steel plate is preferably used. Bind bar 4 of the metal sheet is formed into a predetermined shape by press molding.

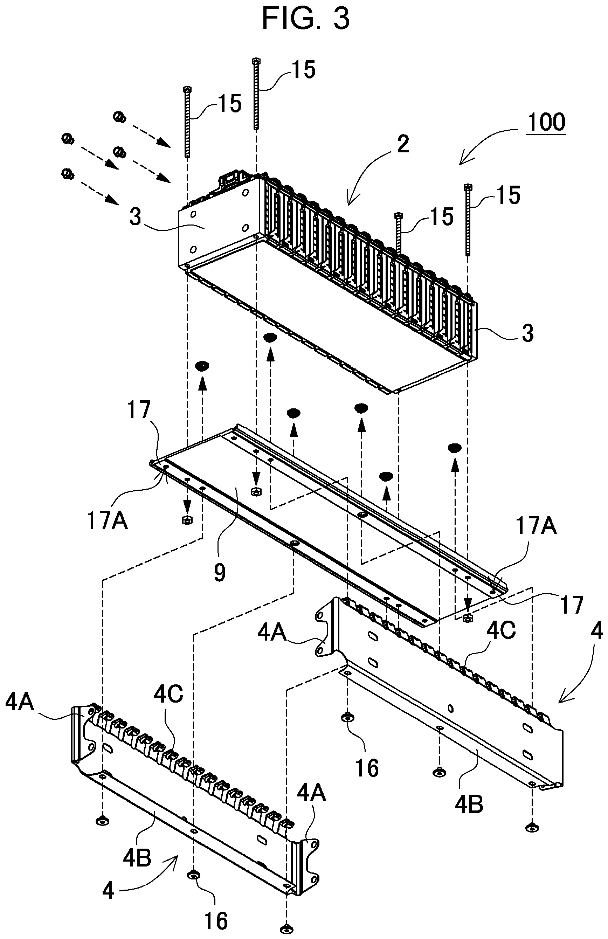

As shown in the exploded perspective views of Figs. 2 and 3, in order to fix both ends of bind bar 4 to the pair of end plates 3, both end parts of bind bar 4 in the stacking direction of battery stack 2 are bent along the outer surface of end plate 3 at the both ends to provide fixing part 4A. Bind bar 4 fastens the pair of end plates 3 by, for example, screwing fixing part 4A to end plate 3.

As shown in Figs. 2 to 4, in bind bar 4, a lower end is bent into an L shape to form lower coupling piece 4B. Lower coupling piece 4B is stacked on the lower surface of both side parts of the base plate and coupled to the base plate. Bind bar 4 is bent at an upper end part to form pressing piece 4C that presses the end part of the upper surface of battery stack 2. Pressing pieces 4C are separated for each battery cell 1 so as to individually press the upper surface of battery cells 1 of battery stack 2. This allows each pressing piece 4C to press battery cell 1 toward base plate 9 independently of adjacent pressing pieces 4C. In this way, each battery cell 1 is blocked from floating from base plate 9 and held in the height direction, and even if vibration, impact, and the like are applied to battery stack 2, each battery cell 1 can be maintained so as not to be displaced in the up-down direction. Thus, bind bar 4 covers and holds the corners of the upper and lower surfaces of battery stack 2 on both left and right side parts of battery stack 2.

A known structure can be appropriately used as the shape of bind bar 4 and the fastening structure with end plate 3. For example, both end parts of the bind bar may be formed into a flat plate shape without being bent into an L shape, and may be screwed with the side surface of the end plate. Alternatively, a part where the bind bar opposes the side surface of the end plate may have an engagement structure to be engaged in a stepped manner, and the bind bar is further screwed in a state of being locked to the side surface of the end plate with a locking structure.

An insulating sheet may be interposed between bind bar 4 and battery stack 2. The insulating sheet is made of a material having an insulating property such as a resin, and provides insulation between bind bar 4 made of metal and battery cell 1.

### (Base plate 9)

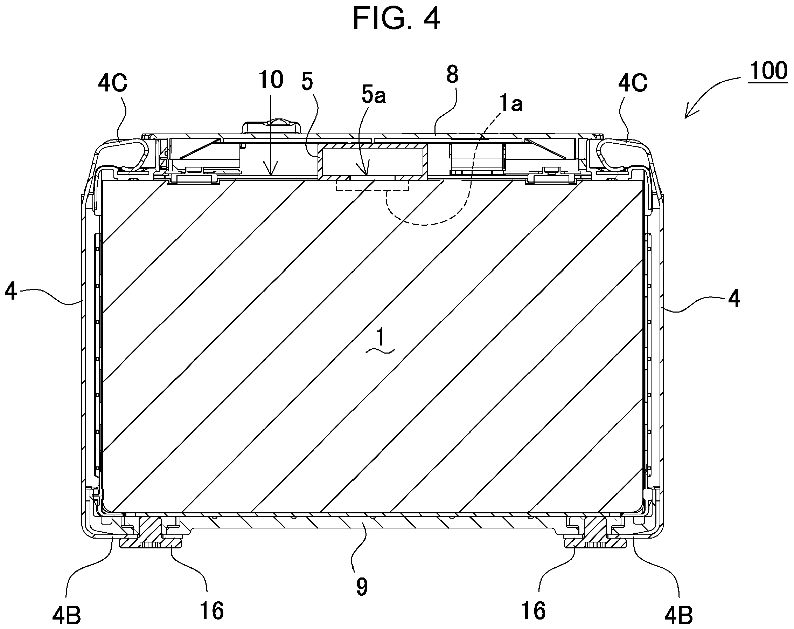

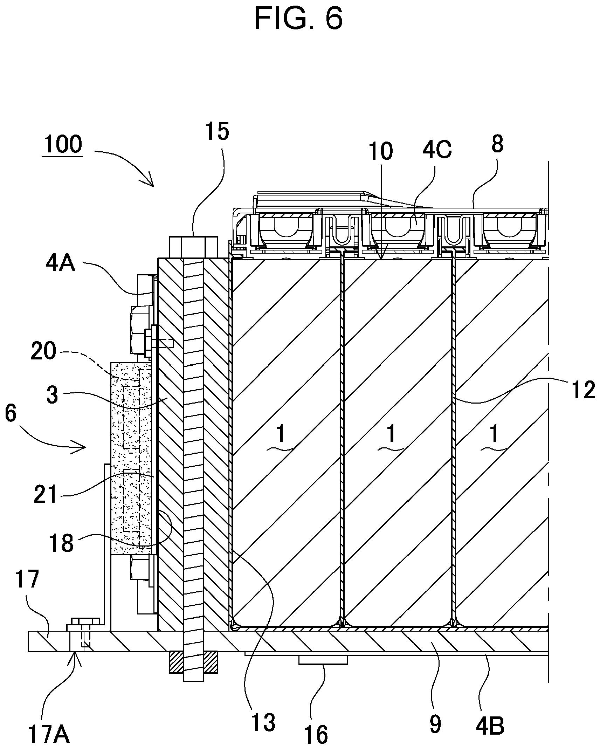

As shown in Figs. 4 and 6, base plate 9 is disposed on the bottom surfaces of battery stack 2 and end plate 3. End plate 3 is fixed to base plate 9, and more preferably, the lower end part of bind bar 4 is also fixed to base plate 9. End plate 3 and bind bar 4 are fixed to base plate 9 via fixing screws 15 and 16. Fixing screw 15 for fixing end plate 3 penetrates end plate 3 in the up-down direction and fixes end plate 3 to base plate 9. Fixing screw 16 for fixing bind bar 4 also penetrates lower coupling piece 4B, which is a lower end part of bind bar 4, and is fixed to base plate 9.

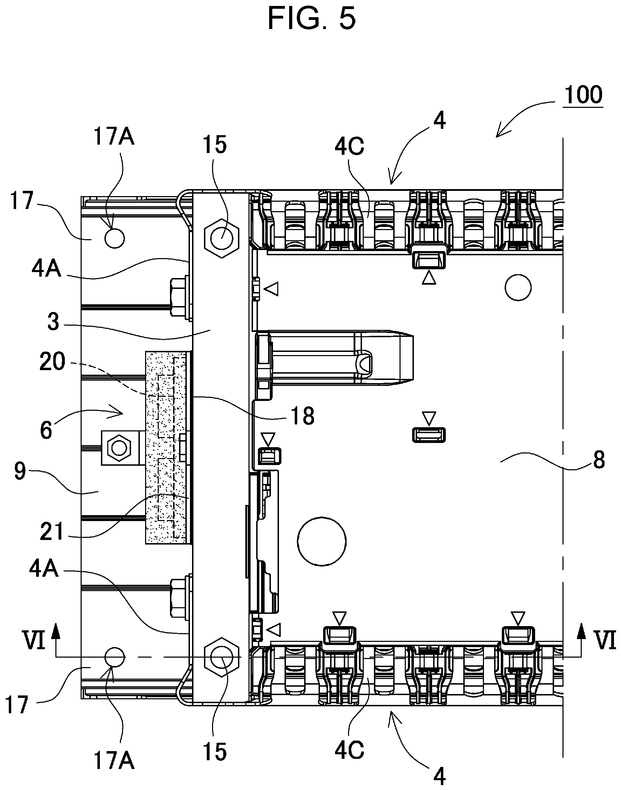

Both end parts of base plate 9 are provided with brackets 17 for fixing battery module 100 to a device to which battery module 100 is mounted such as a vehicle. As shown in Figs. 5 and 6, bracket 17 is provided to protrude to the outside of end plate 3. In bracket 17, fixing hole 17A for inserting a set screw (not illustrated) is opened, and bracket 17 is fixed to a chassis or the like of a vehicle, which is a device to which battery module 100 is mounted. The set screw penetrates bracket 17 and is screwed into the chassis or the like of the vehicle to fix battery module 100 at a fixed position.

In battery stack 2, each battery cell 1 is disposed in a thermally coupled state with base plate 9 in contact with base plate 9. Battery cell 1 thermally coupled to base plate 9 dissipates heat energy to base plate 9. Base plate 9 can be forcibly cooled to further efficiently dissipate heat energy of battery cell 1. Although not illustrated, base plate 9 to be forcibly cooled can be forcibly cooled by circulating a refrigerant or a coolant inside of base plate 9. The base plate can also be forcibly cooled by providing a heat dissipation fin on the lower surface. The base plate can also be forcibly cooled by a cooling plates stacked in a surface contact state on the lower surface of the base plate. The cooling plate can be forcibly cooled by circulating a refrigerant or a coolant inside of the cooling plate.

### (Gas duct 5)

As shown in Fig. 4, gas duct 5 is disposed on an upper surface of battery cell 1, that is, at a position opposing terminal surface 10 of battery cell 1. Gas duct 5 has a cylindrical shape with an inner capacity for smoothly discharging the material discharged from the opening part of exhaust valve 1a, opens at a lower surface, and is coupled to the opening part of exhaust valve 1a of each battery cell 1. Gas duct 5 is disposed in close contact with the upper surface of battery stack 2 so as not to form a gap with terminal surface 10 of battery cell 1 so as to discharge the exhaust gas discharged from exhaust valve 1a to the outside, and opening part 5a opening on the lower surface is coupled to exhaust valve 1a of each battery cell 1. Gas duct 5 can be disposed so as not to leak the exhaust gas by disposing a packing, a sealing material, or the like between gas duct 5 and terminal surface 10.

Although not illustrated, the gas duct can be configured by a collective duct disposed on the upper surface of the battery stack in a posture extending in the stacking direction of the battery cells, and a branch duct coupled to the collective duct and having a tip end coupled to the exhaust valve. In this gas duct, the collective duct can be disposed away from the terminal surface, and the tip of the branch duct can be coupled to the opening part of the exhaust valve.

### (Electronic circuit block 6)

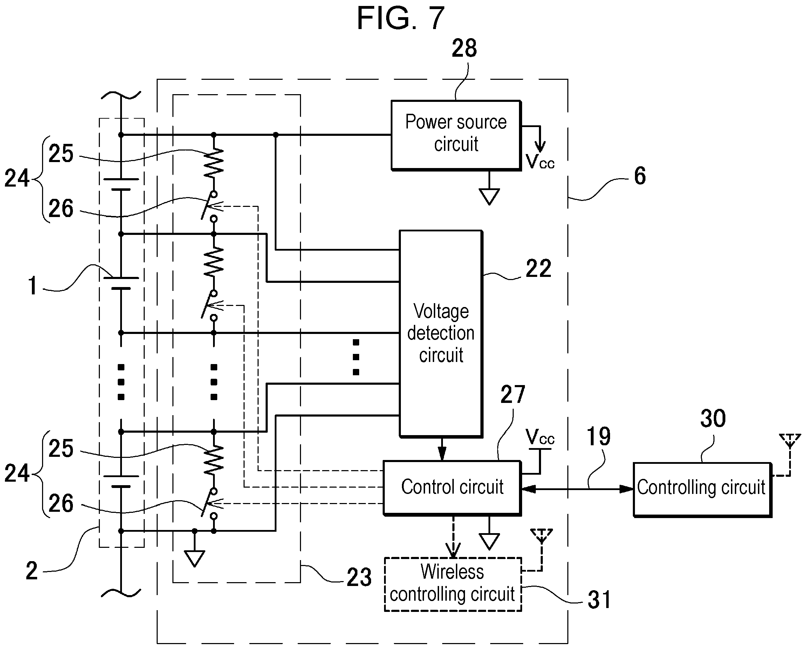

As shown in Fig. 7, electronic circuit block 6 includes voltage detection circuit 22 that is connected to each battery cell 1 via a lead wire and detects voltages of battery cells 1. In electronic circuit block 6, electronic components for implementing voltage detection circuit 22 are mounted on circuit board 20 (see Figs. 5 and 6). However, electronic circuit block 6 can be a block in which, with all electronic circuits including voltage detection circuit 22 as an integrated circuit, the integrated circuit is embedded in a package of an insulation material. As shown in Figs. 5 and 6, electronic circuit block 6 can be a block in which a metal sheet of radiator 21 is disposed on the surface. Radiator 21 is thermally coupled to a heat generating component built in electronic circuit block 6, for example, a discharge resistor of an equalizing circuit and a semiconductor element such as a field effect transistor (FET) that controls a current, and dissipates heat energy of these heat generating components to the outside. Electronic circuit block 6 has a plate shape as a whole by mounting the electronic components on circuit board 20, or has a plate shape by embedding the integrated circuit in the package.

Electronic circuit block 6 including voltage detection circuit 22 detects the voltage of battery cell 1 whose voltage fluctuates by charging and discharging, and prevents overcharge and overdischarge of each battery cell 1. The battery module may include controlling circuit 30 that controls a charge and discharge current of battery stack 2. Controlling circuit 30 controls the charge and discharge current to prevent overcharge and overdischarge of battery cell 1. Voltage detection circuit 22 transmits voltage data of battery cell 1 to controlling circuit 30.

Voltage detection circuit 22 preferably detects voltages of all battery cells 1. However, it is possible for voltage detection circuit 22 not to necessarily detect voltages of all battery cells 1 but to, for example, divide battery cells 1 constituting battery stack 2 into a plurality of battery units and detect the voltage of each battery unit. The battery unit in which the plurality of battery cells 1 are connected in parallel can detect the voltage of the battery unit and detect the voltages of all the battery cells. The battery unit in which the plurality of battery cells are connected in series detects the voltage of the battery unit and detects the total voltage of the battery cells connected in series. The battery unit in which the plurality of battery cells are connected in series includes 2 to 5 battery cells. Since this battery unit detects the voltage of the battery unit and detects the total voltage of the 2 to 5 battery cells 1, the voltage of the battery cells becomes 1/2 to 1/5 of the total voltage to be detected. The voltage of battery cell 1 changes depending on the remaining capacity. The voltage of battery cell 1 becomes higher than a preset maximum voltage when overcharged, and becomes lower than a minimum voltage when overdischarged. When battery cell 1 is overcharged or overdischarged, the electrical characteristics deteriorate and the safety also deteriorates. Voltage detection circuit 22 detects the voltage of battery cell 1 and transmits the voltage to the controlling circuit, and the controlling circuit controls the charge and discharge current such that the voltage of battery cell 1 falls within a set range.

As the battery module repeats charging and discharging, the remaining capacity of each battery cell 1 becomes imbalanced. Battery cells 1 connected in series are charged and discharged with the same current. Battery cells 1 are charged and discharged at the same current, but the electrical characteristics of battery cells 1 are not completely the same. Therefore, even in the battery module in which the plurality of battery cells 1 are connected in series, the voltages of battery cells 1 become imbalanced. The imbalance of battery cells 1 causes overcharge or overdischarge of specific battery cell 1. Since the battery module simultaneously charges and discharges all battery cells 1, the imbalance of battery cells 1 causes overcharge or overdischarge of specific battery cell 1. Overcharge and overdischarge of battery cell 1 deteriorate electrical characteristics of battery cell 1, cause deterioration, and deteriorate safety of the battery module. Equalizing circuit 23 eliminates the imbalance of the voltages of battery cells 1.

Electronic circuit block 6 is also mounted with equalizing circuit 23 that equalizes the voltages of battery cells 1. Equalizing circuit 23 equalizes the voltages of battery cells 1 to eliminate the imbalance. An example of a circuit diagram of equalizing circuit 23 is shown in Fig. 7. Equalizing circuit 23 shown in this figure discharges high-voltage battery cell 1 with discharge resistor 25 to eliminate the imbalance. However, the equalizing circuit is not specified as a circuit that discharges the battery with a discharge resistor. For example, the equalizing circuit can eliminate a voltage difference between battery cells by discharging a high-voltage battery cell to a condenser or a capacitor such as a storage battery, storing the electric power in the capacitor, and discharging the charge of this capacitor to a low-voltage battery cell. The equalizing circuit can convert the voltage of the high-voltage battery cell by a DC/DC converter, and equalize the voltages by charging the low-voltage battery cell while controlling the current.

Equalizing circuit 23 in Fig. 7 includes discharge circuit 24 in which switching elements 26 are connected in series to discharge resistors 25, and connects control circuit 27 that detects each cell voltage and controls switching elements 26 to be ON/OFF and voltage detection circuit 22 that detects the cell voltage of each battery cell 1. Discharge circuit 24 of discharge resistor 25 and switching element 26 are connected in parallel to each battery cell 1. In equalizing circuit 23, when the cell voltage of battery cell 1 increases, control circuit 27 switches switching element 26 to ON, discharge resistor 25 discharges battery cell 1, and the voltage of battery cell 1 is reduced and equalized.

Equalizing circuit 23 is driven by receiving power supply from battery stack 2. Equalizing circuit 23 in the drawing operates by an output voltage (Vcc) of power source circuit 28 that receives power supply from battery stack 2. The voltage of battery stack 2 can be stepped down by a DC/DC converter that is, for example, power source circuit 28, and supplied to equalizing circuit 23. According to this circuit configuration, even when the voltage of battery stack 2 is high, the voltage can be supplied as an optimal voltage to equalizing circuit 23.

Control circuit 27 compares the cell voltages of battery cells 1, and controls switching element 26 so as to equalize the cell voltages of all battery cells 1. Control circuit 27 discharges by switching, to ON, switching element 26 of discharge circuit 24 connected to battery cell 1 having a too high voltage. The voltage of battery cell 1 decreases as battery cell 1 is discharged. Switching element 26 is switched from ON to OFF when the voltage of battery cell 1 decreases to be balanced with other battery cells 1. When switching element 26 becomes OFF, the discharge of battery cell 1 is stopped. Thus, control circuit 27 discharges battery cell 1 having a high cell voltage and balances the cell voltages of all battery cells 1.

Equalizing circuit 23 described above equalizes the voltages of all battery cells 1. However, after dividing all the battery cells into a plurality of battery units, and equalizing the voltages of the battery cells constituting the battery units by the cell equalizing circuit, the battery module can equalize the voltages of the entire battery units by a unit equalizing circuit. The unit equalizing circuit detects a unit voltage of each battery unit, discharges a battery unit having a high unit voltage, and equalizes the voltages of the battery units.

Electronic circuit block 6 is fixed to end plate 3 and dissipates heat to end plate 3. Electronic circuit block 6 includes a semiconductor element such as an FET that controls a current and a heat generating element such as a discharge resistor. Electronic circuit block 6 can reduce temperature rise by dissipating the heat energy of the heat generating element to end plate 3. The temperature rise of electronic circuit block 6 adversely affects a built-in heat generating element and the like. In particular, equalizing circuit 23 discharges battery cell 1 by discharge resistor 25 and lowers the voltage, but discharge resistor 25 generates heat by Joule heat of the discharge current. Discharge resistor 25 can rapidly decrease the voltage of battery cell 1 in a short time by increasing the current, but Joule heat that causes discharge resistor 25 to generate heat increases in proportion to the square of the discharge current. Therefore, in equalizing circuit 23 capable of rapidly decreasing the voltage of battery cell 1 and shortening the equalization time, heat energy to generate heat increases. Equalizing circuit 23 equalizes battery cell 1 at a timing when battery cell 1 is not charged or discharged, and hence it is required to make the equalization time shorter. Since the equalization time can be shortened by increasing the current of discharge resistor 25, how efficiently the heat generation energy of discharge resistor 25 can be dissipated becomes an important factor for specifying the equalization time.

Since the temperature rise due to the heat generation energy of the heat generating component results in a failure of the component, design is performed such that the entire heat generating component is enlarged so as not to abnormally rise in temperature, or the heat generation amount per unit time of discharge resistor is reduced. When electronic circuit block 6 is downsized such that it can be disposed in a narrow space, a heat dissipation area is reduced, heat dissipation energy is reduced, and a temperature rise is increased. For this reason, as in a conventional battery module, an electronic circuit block that is downsized so as to be disposed in a small space between a gas duct and a bus bar has a small heat dissipation area, so that it is necessary to reduce heat dissipation energy. Therefore, in the electronic circuit block disposed in a narrow space, it is necessary to reduce the heat dissipation energy, and the time for equalizing the battery cells becomes long. The battery module in which a large number of battery cells are stacked is used for a large-capacity application such as a battery module for driving a motor for a vehicle and a power source of a power storage device, and thus the capacity of the battery cell is also considerably large. In the large-capacity battery module, the capacity imbalance due to the battery cell voltage imbalance relatively increases as the battery cell capacity increases. Therefore, in this type of battery module, since the equalization time of the battery cells is shortened as much as possible and the battery cells are quickly equalized, it is capability to increase the discharge current, but the increase in the discharge resistor increases the heat generation energy, and it is thus required to increase the heat dissipation area. Therefore, in order to dispose the electronic circuit block in a narrow space, downsizing is required, and in order to shorten the equalization time by discharging with a large current, it is necessary to increase the heat dissipation area and increase the size. For this reason, in the electronic circuit block, downsizing and shortening of the equalization time are characteristics that contradict each other, and both the characteristics cannot be satisfied. There is a need for solving a contradicting problem of downsizing that is required for disposing the electronic circuit block in a limited space and upsizing for having a high discharge capability.

In the battery module in which electronic circuit block 6 is fixed to end plate 3 in a thermally coupled state and end plate 3 is used in combination with heat dissipation of electronic circuit block 6, heat generation energy of electronic circuit block 6 can be efficiently dissipated by end plate 3. In particular, end plate 3 has a very large heat capacity, and has a small temperature rise with respect to the heat energy to be absorbed, so that the equalization time of battery cells 1 can be shortened. Furthermore, end plate 3 has a large surface area and large heat dissipation energy from the surface, and this also reduces the temperature rise. Furthermore, in the structure for fixing end plate 3 to base plate 9, heat energy is conducted from end plate 3 to base plate 9, and the temperature rise is further reduced. In the structure in which base plate 9 is forcibly cooled or cooling plates are stacked on base plate 9, end plate 3 is forcibly cooled by base plate 9, the temperature rise is further reduced, the cooling effect of electronic circuit block 6 is further increased, and the temperature rise of electronic circuit block 6 is reduced to an ideal state.

In battery module 100 of Figs. 5 and 6, electronic circuit block 6 is fixed to the outer surface of end plate 3. Battery module 100 has an advantage that heat generation energy of electronic circuit block 6 can be conducted to fixed end plate 3 and dissipate heat, and heat can also be dissipated from the exposed surface to the outside air to dissipate heat more efficiently. The outer shape of electronic circuit block 6 fixed to the surface of end plate 3 is smaller than the outer shape of end plate 3, and does not protrude from the outer peripheral edge of end plate 3. In battery module 100, while electronic circuit block 6 is disposed on end plate 3, electronic circuit block 6 does not increase the outer shape of battery module 100, and electronic circuit block 6 can efficiently dissipate heat while being downsized.

In battery module 100 of Fig. 5, the thickness of electronic circuit block 6 is set to a dimension that does not protrude from the tip end edge of bracket 17 of base plate 9 to the outer surface in plan view. In battery module 100, while electronic circuit block 6 is fixed to end plate 3, the outer shape in plan view does not become larger than that of base plate 9, and electronic circuit block 6 can be disposed at an ideal position while being downsized as a whole.

End plate 3 is pressed from the inside with a strong pressure by battery cell 1 exhibiting a physical property of expanding when charged and discharged. End plate 3 pressed against battery stack 2 and having both side edges fixed by bind bar 4 is curved by the pressure of battery stack 2. When electronic circuit block 6 deforms by curved end plate 3, the configuration components of electronic circuit block 6 are adversely affected. For example, electronic circuit block 6 in which the electronic component is fixed to the circuit board has adverse effects such as the circuit board being curved and the conducting part being damaged. In electronic circuit block 6 of Fig. 6, a part of the upper edge part, preferably the center part, is locally fixed to end plate 3, and the lower part is fixed to bracket 17. In battery module 100, even if battery cell 1 expands and end plate 3 deforms, the deformation does not adversely affect electronic circuit block 6. In battery module 100 described above, since a part of the upper edge part of electronic circuit block 6 is locally fixed to end plate 3, electronic circuit block 6 does not deform together even if end plate 3 is curved. Since the lower part of electronic circuit block 6 is fixed to bracket 17 of base plate 9, electronic circuit block 6 is reliably fixed with the upper part and the lower part. That is, electronic circuit block 6 is firmly fixed to end plate 3 and base plate 9 without being adversely affected by deformation of end plate 3.

Battery module 100 in which electronic circuit block 6 is fixed to bracket 17 of base plate 9 has a feature that electronic circuit block 6 is disposed at a position different from fixing hole 17A in plan view, whereby base plate 9 can be easily and reliably fixed to usage equipment such as a chassis of a vehicle while fixing electronic circuit block 6 to end plate 3. Battery module 100 of Fig. 5 is provided with fixing holes 17A on both side parts of bracket 17, and thus has a horizontal width that allows battery module 100 to be disposed inside fixing holes 17A of bracket 17.

Electronic circuit block 6 is preferably fixed to end plate 3 in an insulated manner. Electronic circuit block 6 is fixed by disposing insulating sheet 18 between electronic circuit block 6 and end plate 3. As an elastic sheet made of a rubber-like elastic body, insulating sheet 18 can always hold curved end plate 3 and electronic circuit block 6 in a thermally coupled state. While electronic circuit block 6 fixed to end plate 3 in an insulated manner has a structure in which metal radiator 21 and the like are exposed to the surface and can efficiently dissipate heat, electronic circuit block 6 can improve insulation characteristics with respect to battery stack 2 disposed inside end plate 3, and thus reliability can be raised. Battery module 100 in which end plates 3 are disposed on both end surfaces of battery stack 2 can prevent electric shock and electric leakage by insulating end plates 3 from a ground line. High-voltage battery stack 2 is disposed inside end plate 3 insulated from the ground line. End plate 3 insulated from battery stack 2 maintains high electric leakage resistance with battery stack 2, but the electric leakage resistance may decrease due to various factors. For example, dew condensation water between end plate 3 and battery stack 2 causes a decrease in electric leakage resistance. Electronic circuit block 6 disposed in an insulated manner from end plate 3 is insulated from end plate 3 even when contact resistance between end plate 3 and battery stack 2 is lowered, so that adverse effects such as electric leakage and electric shock are prevented to ensure high safety and reliability. However, since the end plate is insulated from the battery stack, the end plate can be connected to the ground line.

In battery module 100 described above, the heat generating component of equalizing circuit 23 of electronic circuit block 6 can be efficiently dissipated by end plate 3, so that battery module 100 has an advantage that equalizing circuit 23 can quickly equalize battery cells 1. This is because the power consumption of equalizing circuit 23 is increased to discharge battery cell 1 with a large current, and the voltage of high-voltage battery cell 1 can be rapidly reduced. Equalizing circuit 23 discharges high-voltage battery cell 1 to eliminate voltage imbalance or charges low-voltage battery cell 1 with high-voltage battery cell 1 and thus equalizes. The circuit that discharges and equalizes high-voltage battery cell 1 discharges high-voltage battery cell 1 with discharge resistor 25, and equalizing circuit 23 that charges low-voltage battery cell 1 with high-voltage battery cell 1 supplies electric power from high-voltage battery cell 1 to low-voltage battery cell 1 and equalizes. In the circuit that discharges and equalizes battery cell 1 by discharge resistor 25, discharge resistor 25 that discharges battery cell 1 and the semiconductor element that is switching element 26 that controls the discharge current of discharge resistor 25 generate heat. This circuit has a structure for efficiently discharging the heat energy of discharge resistor 25 and the semiconductor element, and can shorten the time for equalizing by increasing the discharge current of discharge resistor 25 and the semiconductor element. When the discharge current is increased, the heat generation amount is also increased. Therefore, efficient discharge can increase the discharge current. In the equalizing circuit that charges the low-voltage battery cell with the high-voltage battery cell, the semiconductor element that controls the current to be charged from the high-voltage battery cell to the low-voltage battery cell generates heat, and therefore the time for equalization can be shorten by increasing the current of this semiconductor element.

As indicated by a chain line in Fig. 7, electronic circuit block 6 fixed to end plate 3 is provided with wireless communication circuit 31, and wireless communication circuit 31 can wirelessly transmit, to central controlling circuit 30, information such as a battery voltage detected by voltage detection circuit 22. Electronic circuit block 6 does not need to be connected to central controlling circuit 30 by a lead wire, and has a feature that wiring can be simplified. In particular, in the battery module mounted on a vehicle, electronic circuit block 6 can wirelessly transmit information to central controlling circuit 30 that controls the running motor of the vehicle. The battery module having this structure can simplify a complicated wire harness unique to a vehicle, prevent adverse effects such as contact failure that cannot be avoided in the wire harness, and achieve high reliability over a long period of time.

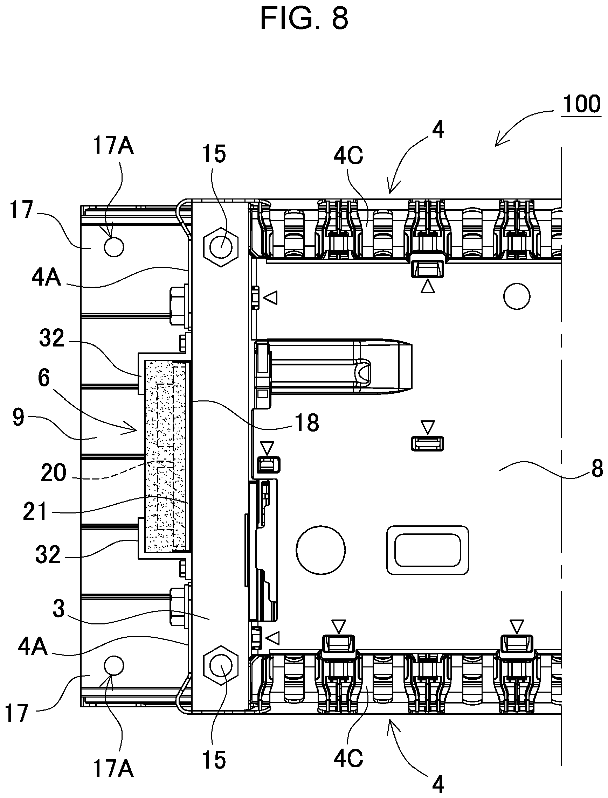

Electronic circuit block 6 including wireless communication circuit 31 is required to have a characteristic of eliminating a transmission error due to external noise. Metal end plate 3 can reduce an influence of external noise by shielding the surface of electronic circuit block 6. In particular, as shown in Fig. 8, in end plate 3 having shield protrusion part 32 that shields the outer peripheral edge of electronic circuit block 6 as an integrated structure, wireless communication circuit 31 can stably and accurately transmit information wirelessly. Furthermore, by connecting the end plate to the ground line, the shielding effect can be improved and the influence of external noise can be further reduced.

The battery module described above can be used as a power source for a vehicle that supplies electric power to a motor that causes an electric vehicle to travel. As an electric vehicle mounted with the battery module, an electric vehicle such as a hybrid automobile or a plug-in hybrid automobile that travels by both an engine and a motor, or an electric automobile that travels only by a motor can be used, and is used as a power source of these vehicles. In order to obtain electric power for driving the vehicle, a large number of the above-described battery modules are connected in series or in parallel, and a large-capacity, high-output battery module to which a necessary controlling circuit is further added can be constructed and mounted.

### (Battery module for hybrid automobile)

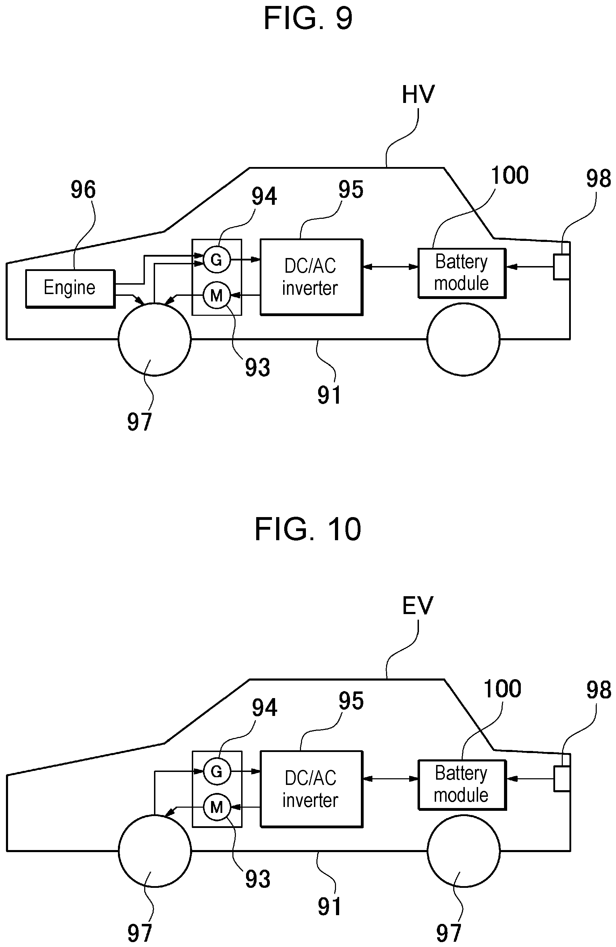

Fig. 9 shows an example in which a battery module is mounted on a hybrid automobile that travels by both an engine and a motor. Vehicle HV mounted with the battery module shown in this figure includes vehicle body 91, engine 96 and running motor 93 that causes vehicle body 91 to travel, wheels 97 driven by engine 96 and running motor 93, battery module 100 that supplies electric power to motor 93, and power generator 94 that charges the battery of battery module 100. Battery module 100 is connected to motor 93 and power generator 94 via DC/AC inverter 95. Vehicle HV travels by both motor 93 and engine 96 while charging and discharging the battery of battery module 100. Motor 93 is driven in a region where an engine efficiency is low, for example, during acceleration or low-speed traveling, and causes the vehicle to travel. Motor 93 is driven by electric power supplied from battery module 100. Power generator 94 is driven by engine 96 or driven by regenerative braking when braking the vehicle, and charges the battery of battery module 100. As shown in the drawing, vehicle HV may include charging plug 98 for charging battery module 100. Battery module 100 can be charged by connecting charging plug 98 to an external power source.

### (Battery module for electric automobile)

Fig. 10 shows an example in which a battery module is mounted on an electric automobile that travels only by a motor. Vehicle EV mounted with the battery module shown in this figure includes vehicle body 91, motor 93 for traveling that causes vehicle body 91 to travel, wheels 97 driven by motor 93, battery module 100 that supplies electric power to motor 93, and power generator 94 that charges the battery of battery module 100. Battery module 100 is connected to motor 93 and power generator 94 via DC/AC inverter 95. Motor 93 is driven by electric power supplied from battery module 100. Power generator 94 is driven by the energy at the time of applying regenerative braking to vehicle EV, and charges the battery of battery module 100. Vehicle EV includes charging plug 98, and battery module 100 can be charged by connecting charging plug 98 to an external power source.

### (Battery module for power storage device)

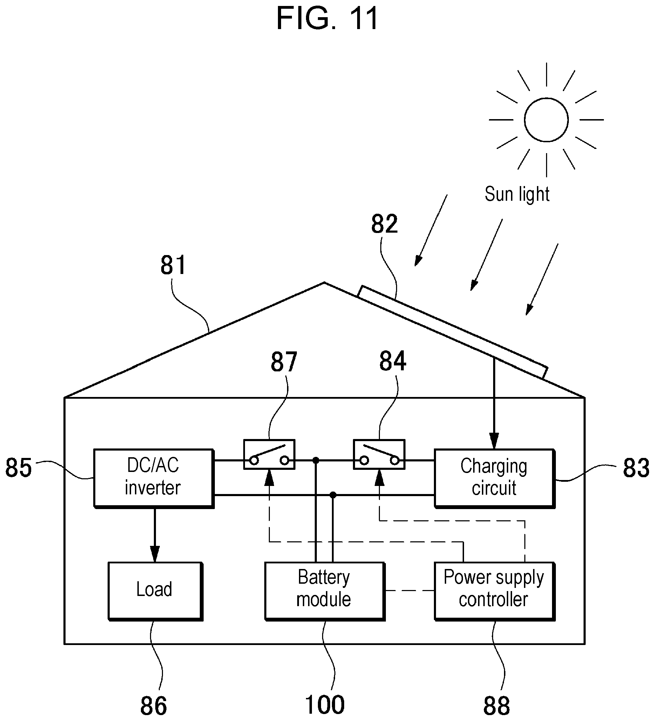

The application of the battery module of the present invention is not limited to a power source for a motor that causes the vehicle to travel. The battery module according to the exemplary embodiment can be used as a power source for a power storage device that performs power storage by charging the battery with electric power generated by photovoltaic power generation, wind power generation, or other methods. Fig. 11 shows a power storage device that performs power storage by charging the battery of battery module 100 by solar cell 82.

The power storage device shown in Fig. 11 charges the battery of battery module 100 with electric power generated by solar cell 82 disposed on a roof or a rooftop of building 81 such as a house and a factory. This power storage device charges the battery of battery module 100 via charging circuit 83 with solar cell 82 serving as a charging power source, and then supplies electric power to load 86 via DC/AC inverter 85. Thus, this power storage device includes a charge mode and a discharge mode. In the power storage device shown in the figure, DC/AC inverter 85 and charging circuit 83 are connected to battery module 100 via discharge switch 87 and charge switch 84, respectively. Discharge switch 87 and charge switch 84 are turned on and off by power supply controller 88 of the power storage device. In the charge mode, power supply controller 88 switches charge switch 84 to ON and switches discharge switch 87 to OFF, and permits charging from charging circuit 83 to battery module 100. When charging is completed and the battery is fully charged or when the battery is in a state where a capacity of a predetermined value or greater is charged, power supply controller 88 turns off charge switch 84 and turns on discharge switch 87 to switch the mode to the discharge mode and allow discharging from battery module 100 to load 86. Where necessary, it is possible to simultaneously perform power supply to load 86 and charging of battery module 100 by turning on charge switch 84 and turning on discharge switch 87.

Although not illustrated, the battery module can also be used as a power source of a power storage device that performs power storage by charging a battery using midnight electric power at night. The battery module charged with midnight electric power is charged with the midnight electric power, which is surplus electric power generated by a power station, and outputs the electric power during the daytime when an electric power load increases. Thus, peak electric power during the daytime can be limited to a small value. The battery module can also be used as a power source charged with both output of a solar cell and the midnight electric power. This battery module can efficiently perform power storage effectively using both electric power generated by the solar cell and the midnight electric power in consideration of weather and electric power consumption.

The power storage device described above can be suitably used in applications such as a backup battery module that can be installed in a rack of a computer server, a radio battery module for a wireless base station for a cellular phone or the like, a power storage power source for use in a house or a factory, a power storage device combined with a solar cell such as a power source for street lights, and a backup power source for traffic lights and traffic indicators on roads.

### INDUSTRIAL APPLICABILITY

The battery module according to the present invention can be suitably used as a battery module for a plug-in hybrid electric automobile and a hybrid electric automobile that can switch between an EV traveling mode and an HEV traveling mode, an electric automobile, and the like. The battery module can also be appropriately used in applications such as a backup battery module that can be installed in a rack of a computer server, a backup battery module for a radio base station for a cellular phone or the like, a power storage power source for use in a house or a factory, a power storage device combined with a solar cell such as a power source for street lights, and a backup power source for traffic lights.

### REFERENCE MARKS IN THE DRAWINGS

100: battery module
1: battery cell
1a: exhaust valve
2: battery stack
3: end plate
4: bind bar
4A: fixing part
4B: lower bending piece
4C: pressing piece
5: gas duct
5a: opening part
6: electronic circuit block
8: upper surface cover
9: base plate
10: terminal surface
11: electrode terminal
12: insulating spacer
13: end surface spacer
14: bus bar
15: fixing screw
16: fixing screw
17: bracket
17A: fixing hole
18: insulating sheet
19: lead wire
20: circuit board
21: radiator
22: voltage detection circuit
23: equalizing circuit
24: discharge circuit
25: discharge resistor
26: switching element
27: control circuit
28: power source circuit
30: controlling circuit
31: wireless communication circuit
32: shield protrusion part
81: building
82: solar cell
83: charging circuit
84: charge switch
85: DC/AC inverter
86: load
87: discharge switch
88: power supply controller
91: vehicle body
93: motor
94: power generator
95: DC/AC inverter
96: engine
97: wheel
98: charging plug
900: battery module
901: battery cell
901a: exhaust valve
902: battery stack
903: end plate
904: bind bar
905: gas duct
906: circuit board
910: terminal surface
911: electrode terminal
914: bus bar
HV, EV: vehicle

## Claims

1. A battery module (100) comprising:
a battery stack (2) including a plurality of stacked battery cells (1);
a pair of end plates (3) disposed at both end parts in a stacking direction of the battery stack (2);
a bind bar (4) coupling the pair of the end plates (3) to each other; and
an electronic circuit block (6) mounted with a voltage detection circuit (22) that detects a voltage of each of the plurality of stacked battery cells (1), wherein
the electronic circuit block (6) is disposed on a surface of one of the pair of end plates (3),
**characterized in that**
the electronic circuit block (6) is fixed to an outer side of the surface of the one of the pair of end plates (3) in a thermally coupled state and **in that**
the electronic circuit block (6) includes an equalizing circuit of the plurality of stacked battery cells (1).

2. The battery module (100) according to Claim 1, wherein the battery module is provided with a gas duct (5) disposed opposite to terminal surfaces of the plurality of stacked battery cells (1).

3. The battery module (100) according to any of Claims 1 to 2, wherein
an outer shape of the electronic circuit block (6) is smaller than an outer shape of the one of the pair of end plates (3), and
the electronic circuit block (6) is disposed on the surface without protruding from an outer peripheral edge of the one of the pair of end plates (3).

4. The battery module (100) according to any of Claims 1 to 3, wherein the pair of end plates (3) include metal.

5. The battery module (100) according to Claim 4, wherein the electronic circuit block (6) is fixed to the one of the pair of end plates (3) in an insulated state.

6. The battery module (100) according to any of Claims 1 to 5, wherein the electronic circuit block (6) includes a wireless communication circuit.

7. The battery module (100) according to Claim 6, wherein the one of the pair of end plates (3) includes, in an integrated structure, a shield protrusion part (32) that shields an outer peripheral edge of the electronic circuit block (6).

8. The battery module (100) according to any of Claims 1 to 7 comprising a base plate (9) to which the pair of end plates (3) are fixed, wherein
the base plate (9) includes a bracket (17) that protrudes from an outer side of the surface of the one of the pair of end plates (3), and
the electronic circuit block (6) is in a shape that does not protrude from a tip end edge of the bracket (17) to an outer side surface in plan view.

9. The battery module (100) according to Claim 8, wherein the electronic circuit (6) block is fixed at a lower part to the bracket (17).

10. The battery module (100) according to Claim 9, wherein
the bracket (17) includes a fixing hole (17A), and
the electronic circuit block (6) is disposed at a position different from the fixing hole (17A) in plan view.

11. The battery module (100) according to Claim 9 or 10, wherein the electronic circuit block (6) is locally fixed at a part of an upper edge part to the one of the pair of end plates (3), and fixed at a lower part to the bracket (17).

12. The battery module (100) according to any of Claims 1 to 8, wherein the electronic circuit block (6) is locally fixed to the one of the pair of end plates (3).

13. The battery module (100) according to any of Claims 1 to 12, wherein the electronic circuit block (6) is fixed to a surface of the one of the pair of end plates (3) via a rubber elastic body.

14. The battery module (100) according to Claim 1, wherein the electronic circuit block (6) is a block in which, with all electronic circuits including voltage detection circuit (22) as an integrated circuit, the integrated circuit is embedded in a package of an insulation material.

15. The battery module (100) according to Claim 14, wherein the electronic circuit block (6) has a plate shape by embedding the integrated circuit in the package.

16. An electric vehicle (EV) including the battery module according to any of Claims 1 to 15, the electric vehicle comprising:
the battery module (100);
a motor (93) for running to which electric power is supplied from the battery module (100);
a vehicle body (91) on which the battery module (100) and the motor (93) are mounted; and
a wheel (97) driven by the motor (93) to cause the vehicle body (91) to travel.

17. A power storage device including the battery module (100) according to any of Claims 1 to 15, the power storage device comprising:
the battery module (100); and
a power supply controller (88) that controls charge and discharge of the battery module (100), wherein the power supply controller (88) enables charging of the plurality of stacked battery cells by external power and performs control to charge the plurality of stacked battery cells.

## Patentansprüche

1. Batteriemodul (100), umfassend:
einen Batteriestapel (2), der eine Vielzahl von gestapelten Batteriezellen (1) umfasst;
ein Paar Endplatten (3), die an beiden Endteilen in einer Stapelungsrichtung des Batteriestapels (2) angeordnet sind;
eine Bindestange (4), die das Paar Endplatten (3) aneinander koppelt; und
einen elektronischen Schaltungsblock (6), der mit einer Spannungsdetektionsschaltung (22) montiert ist, die eine Spannung von jeder der Vielzahl von gestapelten Batteriezellen (1) detektiert, wobei
der elektronische Schaltungsblock (6) auf einer Oberfläche von einer von dem Paar Endplatten (3) angeordnet ist,
**dadurch gekennzeichnet, dass**
der elektronische Schaltungsblock (6) an einer Außenseite der Oberfläche der einen von dem Paar Endplatten (3) in einem thermisch gekoppelten Zustand befestigt ist, und dadurch, dass
der elektronische Schaltungsblock (6) eine Entzerrschaltung der Vielzahl von gestapelten Batteriezellen (1) umfasst.

2. Batteriemodul (100) nach Anspruch 1, wobei das Batteriemodul mit einem Gaskanal (5) versehen ist, der gegenüberliegend zu Anschlussoberflächen der Vielzahl von gestapelten Batteriezellen (1) angeordnet ist.

3. Batteriemodul (100) nach einem der Ansprüche 1 bis 2, wobei
eine äußere Form des elektronischen Schaltungsblocks (6) kleiner als eine äußere Form der einen von dem Paar Endplatten (3) ist, und
der elektronische Schaltungsblock (6) auf der Oberfläche angeordnet ist, ohne von einem äußeren Umfangsrand der einen von dem Paar Endplatten (3) hervorzustehen.

4. Batteriemodul (100) nach einem der Ansprüche 1 bis 3, wobei das Paar Endplatten (3) Metall umfassen.

5. Batteriemodul (100) nach Anspruch 4, wobei der elektronische Schaltungsblock (6) an der einen von dem Paar Endplatten (3) in einem isolierten Zustand befestigt ist.

6. Batteriemodul (100) nach einem der Ansprüche 1 bis 5, wobei der elektronische Schaltungsblock (6) eine drahtlose Kommunikationsschaltung umfasst.

7. Batteriemodul (100) nach Anspruch 6, wobei die eine von dem Paar Endplatten (3) in einer integrierten Struktur einen Abschirmungsvorsprungsteil (32) umfasst, der einen äußeren Umfangsrand des elektronischen Schaltungsblocks (6) abschirmt.

8. Batteriemodul (100) nach einem der Ansprüche 1 bis 7, das eine Basisplatte (9) umfasst, an der das Paar Endplatten (3) befestigt sind, wobei
die Basisplatte (9) einen Träger (17) umfasst, der von einer Außenseite der Oberfläche der einen von dem Paar Endplatten (3) hervorsteht, und
der elektronische Schaltungsblock (6) in einer Form vorliegt, die in der Draufsicht nicht von einem Spitzenendrand des Trägers (17) zu einer äußeren Seitenoberfläche hervorsteht.

9. Batteriemodul (100) nach Anspruch 8, wobei der elektronische Schaltungsblock (6) an einem unteren Teil an dem Träger (17) befestigt ist.

10. Batteriemodul (100) nach Anspruch 9, wobei
der Träger (17) ein Befestigungsloch (17A) umfasst, und
der elektronische Schaltungsblock (6) an einer Position angeordnet ist, die sich in der Draufsicht von dem Befestigungsloch (17A) unterscheidet.

11. Batteriemodul (100) nach Anspruch 9 oder 10, wobei der elektronische Schaltungsblock (6) lokal an einem Teil eines oberen Randteils an der einen von den Paar Endplatten (3) befestigt ist und an einem unteren Teil an dem Träger (17) befestigt ist.

12. Batteriemodul (100) nach einem der Ansprüche 1 bis 8, wobei der elektronische Schaltungsblock (6) lokal an der einen von dem Paar Endplatten (3) befestigt ist.

13. Batteriemodul (100) nach einem der Ansprüche 1 bis 12, wobei der elektronische Schaltungsblock (6) an einer Oberfläche der einen von dem Paar Endplatten (3) über einen elastischen Gummikörper befestigt ist.

14. Batteriemodul (100) nach Anspruch 1, wobei der elektronische Schaltungsblock (6) ein Block ist, in dem, mit sämtlichen elektronischen Schaltungen, welche die Spannungsdetektionsschaltung (22) als eine integrierte Schaltung umfassen, die integrierte Schaltung in einem Gehäuse aus einem Isolationsmaterial eingebettet ist.

15. Batteriemodul (100) nach Anspruch 14, wobei der elektronische Schaltungsblock (6) eine Plattenform durch Einbetten der integrierten Schaltung in dem Gehäuse aufweist.

16. Elektrofahrzeug (EV), welches das Batteriemodul nach einem der Ansprüche 1 bis 15 umfasst, wobei das Elektrofahrzeug umfasst:
das Batteriemodul (100);
einen Motor (93) zum Fahren, der mit elektrischer Leistung von dem Batteriemodul (100) versorgt wird;
einen Fahrzeugkörper (91), an dem das Batteriemodul (100) und der Motor (93) montiert sind; und
ein Rad (97), das von dem Motor (93) angetrieben wird, um zu bewirken, dass der Fahrzeugkörper (91) sich bewegt.

17. Leistungsspeichervorrichtung, die das Batteriemodul (100) nach einem der Ansprüche 1 bis 15 umfasst, wobei die Leistungsspeichervorrichtung umfasst:
das Batteriemodul (100); und
eine Leistungsversorgungssteuereinrichtung (88), die Laden und Entladen des Batteriemoduls (100) steuert, wobei die Leistungsversorgungssteuereinrichtung (88) Laden der Vielzahl von gestapelten Batteriezellen durch externe Leistung ermöglicht und Steuerung zum Laden der Vielzahl von gestapelten Batteriezellen durchführt.

## Revendications

1. Module de batterie (100) comprenant :
un empilement de batteries (2) comprenant une pluralité d'éléments de batterie (1) empilés ;
une paire de plaques d'extrémité (3) disposées au niveau des deux parties d'extrémité dans une direction d'empilement de l'empilement de batteries (2) ;
une barre de liaison (4) couplant la paire de plaques d'extrémité (3) entre elles ; et
un bloc de circuit électronique (6) monté avec un circuit de détection de tension (22) qui détecte une tension de chacun de la pluralité d'éléments de batterie (1) empilés, dans lequel :
le bloc de circuit électronique (6) est disposé sur une surface de l'une de la paire de plaques d'extrémité (3),
**caractérisé en ce que** :
le bloc de circuit électronique (6) est fixé sur un côté externe de la surface de l'une de la paire de plaques d'extrémité (3) dans un état couplé par voie thermique, et **en ce que** :
le bloc de circuit électronique (6) comprend un circuit d'égalisation de la pluralité d'éléments de batterie (1) empilés.

2. Module de batterie (100) selon la revendication 1, dans lequel le module de batterie est prévu avec un conduit de gaz (5) disposé à l'opposé des surfaces terminales de la pluralité d'éléments de batterie (1) empilés.

3. Module de batterie (100) selon l'une quelconque des revendications 1 à 2, dans lequel :
une forme externe du bloc de circuit électronique (6) est inférieure à une forme externe de l'une de la paire de plaques d'extrémité (3), et
le bloc de circuit électronique (6) est disposé sur la surface sans faire saillie d'un bord périphérique externe de l'une de la paire de plaques d'extrémité (3).

4. Module de batterie (100) selon l'une quelconque des revendications 1 à 3, dans lequel la paire de plaques d'extrémité (3) comprend du métal.

5. Module de batterie (100) selon la revendication 4, dans lequel le bloc de circuit électronique (6) est fixé à l'une de la paire de plaques d'extrémité (3) dans un état isolé.

6. Module de batterie (100) selon l'une quelconque des revendications 1 à 5, dans lequel le bloc de circuit électronique (6) comprend un circuit de communication sans fil.

7. Module de batterie (100) selon la revendication 6, dans lequel l'une de la paire de plaques d'extrémité (3) comprend, dans une structure intégrée, une partie de saillie de protection (32) qui protège un bord périphérique externe du bloc de circuit électronique (6).

8. Module de batterie (100) selon l'une quelconque des revendications 1 à 7, comprenant une plaque de base (9) à laquelle est fixée la paire de plaques d'extrémité (3), dans lequel :
la plaque de base (9) comprend une console (17) qui fait saillie d'un côté externe de la surface de l'une de la paire de plaques d'extrémité (3), et
le bloc de circuit électronique (6) se présente sous une forme qui ne fait pas saillie d'un bord d'extrémité de pointe de la console (17) à une surface latérale externe, sur une vue en plan.

9. Module de batterie (100) selon la revendication 8, dans lequel le bloc de circuit électronique (6) est fixé, au niveau d'une partie inférieure, à la console (17).

10. Module de batterie (100) selon la revendication 9, dans lequel :
la console (17) comprend un trou de fixation (17A), et
le bloc de circuit électronique (6) est disposé dans une position différente du trou de fixation (17A), sur la vue en plan.

11. Module de batterie (100) selon la revendication 9 ou 10, dans lequel le bloc de circuit électronique (6) est fixé, localement, au niveau d'une partie d'une partie de bord supérieure, à l'une de la paire de plaques d'extrémité (3) et fixé, au niveau d'une partie inférieure, à la console (17).

12. Module de batterie (100) selon l'une quelconque des revendications 1 à 8, dans lequel le bloc de circuit électronique (6) est fixé, localement, à l'une de la paire de plaques d'extrémité (3).

13. Module de batterie (100) selon l'une quelconque des revendications 1 à 12, dans lequel le bloc de circuit électronique (6) est fixé à une surface de l'une de la paire de plaques d'extrémité (3) via un corps élastique en caoutchouc.

14. Module de batterie (100) selon la revendication 1, dans lequel le bloc de circuit électronique (6) est un bloc dans lequel, avec tous les circuits électroniques qui comprennent le circuit de détection de tension (22) en tant que circuit intégré, le circuit intégré est incorporé dans un emballage d'un matériau d'isolation.

15. Module de batterie (100) selon la revendication 14, dans lequel le bloc de circuit électronique (6) a une forme de plaque en incorporant le circuit intégré dans l'emballage.

16. Véhicule électrique (EV) comprenant le module de batterie selon l'une quelconque des revendications 1 à 15, le véhicule électrique comprenant :
le module de batterie (100) ;
un moteur (93) pour le fonctionnement auquel l'énergie électrique est fournie à partir du module de batterie (100) ;
une carrosserie de véhicule (91) sur laquelle le module de batterie (100) et le moteur (93) sont montés ; et
une roue (97) entraînée par le moteur (93) pour amener la carrosserie de véhicule (91) à se déplacer.

17. Dispositif de stockage d'énergie comprenant le module de batterie (100) selon l'une quelconque des revendications 1 à 15, le dispositif de stockage d'énergie comprenant :
le module de batterie (100) ; et
un organe de commande d'alimentation en énergie (88) qui commande la charge et la décharge du module de batterie (100), dans lequel l'organe de commande d'alimentation en énergie (88) permet de charger la pluralité d'éléments de batterie empilés par l'énergie externe et réalise la commande pour charger la pluralité d'éléments de batterie empilés.
